# EUROPÄISCHE PATENTSCHRIFT

(11) **EP 2 446 796 B1**
(45) Veröffentlichungstag und Bekanntmachung des Hinweises auf die Patenterteilung: **11.12.2013**
(21) Anmeldenummer: 11010220.9
(22) Anmeldetag: 09.02.2009
(51) Int. Cl.: A47L 15/42

(54) **Geschirrspüler mit Wärmepumpe**
Dishwasher with heat pump
Lave-vaisselle doté d'une pompe à chaleur

(43) Veröffentlichungstag der Anmeldung: 02.05.2012
(62) Teilanmeldung aus: 09001756.7
(73) Patentinhaber: V-Zug AG, CH-6301 Zug (CH)
(72) Erfinder: Werner, Jürg, 8908 Hedigen (CH); Dober, Ernst, 6036 Dierikon (CH)
(74) Vertreter: Sutter, Kurt

(56) Entgegenhaltungen:
- EP-A- 1 864 603
- EP-A- 1 917 899
- DE-A1- 3 048 268
- JP-A- 10 080 391

## Beschreibung

Die Erfindung betrifft einen Geschirrspüler sowie ein Verfahren zu dessen Betrieb gemäss Oberbegriff der unabhängigen Ansprüche.

Um die Energieeffizienz von Geschirrspülern zu verbessern, wurde u.a. vorgeschlagen, einen Wärmetauscher vorzusehen, welcher dazu dient, dem Bottich Wärme zu entziehen und sie dem Frischwasser zuzuführen.

In JP 10-080391 ist ein Geschirrspüler beschrieben, bei welchem mit einer Wärmepumpe dem Abwasser Wärme entzogen werden kann. Hierzu ist ein Tank für das Abwasser vorgesehen, in welchen ein Verdampfer der Wärmepumpe eingebracht ist.

Aufgabe der vorliegenden Erfindung ist es, die Energieeffizienz eines Geschirrspülers weiter zu verbessern. Diese Aufgabe wird von den unabhängigen Ansprüchen gelöst. Demgemäss wird eine Wärmepumpe mit mindestens einem Kondensator und mindestens einem Verdampfer eingesetzt, mit denen dem Prozesswasser oder dem Bottich Wärme entzogen und/oder zugeführt werden kann.

Vorzugsweise wird der Kondensator bzw. (falls mehrere Kondensatoren vorhanden sind) mindestens einer der Kondensatoren und/oder, falls mehrere Verdampfer vorhanden sind, mindestens einer der Verdampfer an einer Wand des Bottichs angeordnet, insbesondere dieser Wand entlang verlaufend, wodurch in einfacher Weise, d.h. ohne spezielle Wärmetauschvorrichtungen etc., ein direkter Wärmeeintrag bzw. ein direkter Wärmeentzug ermöglicht wird. Unter "Wand" des Bottichs ist dabei eine seitliche Wand des Bottichs, dessen Decke sowie auch dessen Boden zu verstehen.

Vorzugsweise werden sowohl Verdampfer als auch Kondensator am Bottich angeordnet. In diesem Falle kann während der Trocknungsphase mit der Wärmepumpe einem ersten Wandbereich Wärme zugeführt und einem zweiten Wandbereich Wärme entzogen werden, um so einen Konvektionsstrom im Bottich zu erzeugen und der Prozessluft Wasser zu entziehen. In einer besonders vorteilhaften Ausführung wird am Boden des Bottichs ein Kondensator und an einer Seitenwand ein Verdampfer vorgesehen. Unter "Seitenwand" ist dabei eine vertikale Wand des Bottichs, inklusive Rückwand (oder gegebenenfalls Vorderwand) zu verstehen.

Anspruchsgemäss wird der Verdampfer bzw. (falls mehrere Verdampfer vorhanden sind) mindestens einer der Verdampfer thermisch mit dem Ablaufbereich gekoppelt, durch welchen Wasser vom Bottich nach Gebrauch an die Kanalisation abgegeben wird. So kann dem Abwasser Wärme entzogen werden. Weiter weist der Geschirrspüler ein Überbrückungsventil (20) auf, mit welchem Wasser vom Bottich (1) wahlweise unter Umgehung des Ablaufbereichs (16) aus dem Geschirrspüler abgebbar ist. Dadurch wird es möglich, einen Wärmetransfer zwischen zwei Prozessphasen durchzuführen, selbst wenn diese durch eine dritte Prozessphase getrennt sind.

Weitere bevorzugte Ausführungen der Erfindung ergeben sich aus den abhängigen Ansprüchen sowie aus der nun folgenden Beschreibung anhand der Figuren. Dabei zeigen:
Fig. 1 eine erste Ausführung eines Geschirrspülers,
Fig. 2 eine zweite Ausführung eines Geschirrspülers mit nur einem Verdampfer,
Fig. 3 eine dritte Ausführung eines Geschirrspülers mit nur einem Verdampfer,
Fig. 4 eine vierte Ausführung eines Geschirrspülers mit Überbrückungsventil,
Fig. 5 eine fünfte Ausführung eines Geschirrspülers mit zusätzlicher Zirkulationspumpe,
Fig. 6 eine sechste Ausführung eines Geschirrspülers mit Abwassertank,
Fig. 7 eine siebte Ausführung eines Geschirrspülers mit koaxialem Wärmetauscher und
Fig. 8 einen Schnitt durch das Abwasserrohr einer weiteren Ausführung der Erfindung.

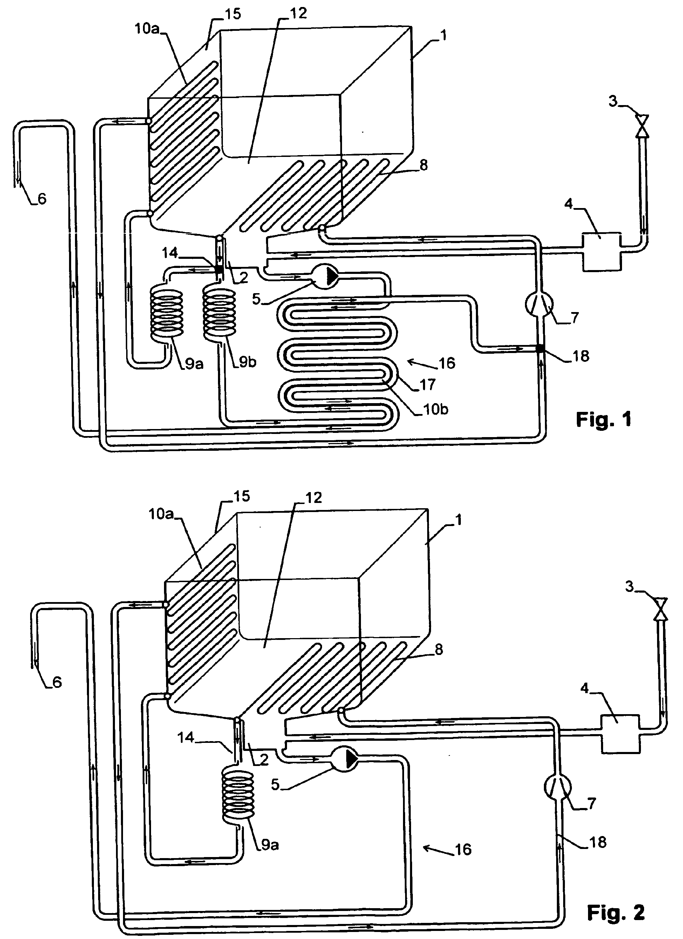

Der in Fig. 1 schematisch dargestellte Geschirrspüler besitzt einen Bottich 1 zur Aufnahme des Spülguts, wie z.B. Besteck, Geschirr oder dergleichen. Weiter besitzt der Geschirrspüler in bekannter Weise (nicht gezeigt) Sprüharme sowie eine Zirkulationspumpe zum Umpumpen von Prozesswasser aus dem Sumpf 2 in die Sprüharme. Das Spülgut ist in einem oder mehreren Geschirrkörben gelagert. Eine Steuerung kontrolliert und steuert die Operationen aller Komponenten. Ein derart ausgestaltetes Gerät ist dem Fachmann bekannt.

Frischwasser wird dem Gerät über ein Frischwasserventil 3 und einen Enthärter 4 zugeführt. Gebrauchtes Wasser wird von einer Ablaufpumpe 5 in eine Abwasserleitung 6 abgepumpt. Auch diese Komponenten sind dem Fachmann grundsätzlich bekannt.

Der Geschirrspüler besitzt weiter eine Wärmepumpe umfassend einen Kompressor 7, von welchem ein Wärmepumpenmedium zu einem oder mehreren Kondensatoren 8 gepumpt wird, wo unter Abgabe von Wärme eine Verflüssigung stattfindet. Vom Kondensator 8 gelangt das Medium über mindestens ein Expansionsventil 9a, 9b zu mindestens einem Verdampfer 10a, 10b, wo das Medium unter Aufnahme von Wärme verdampft. Vom Verdampfer 10a, 10b läuft das Medium zurück zum Kompressor 7.

Der Begriff "Expansionsventil" umfasst dabei jegliche Art von Kapillaren, Drosseln oder dergleichen, die geeignet sind, den Druck des in der Wärmepumpe gepumpten Mediums vor dem Verdampfer zu reduzieren.

In der in Fig. 1 gezeigten Ausführung ist der Kondensator 8 am Boden 12 des Bottichs angeordnet und mit diesem in direktem, Wärme leitenden Kontakt, so dass der Boden 12 im Bereich des Kondensators 8 erwärmt werden kann.

Weiter sind in der in Fig. 1 gezeigten Ausführung zwei Verdampfer 10a, 10b vorgesehen, wobei jedem davon jeweils ein eigenes Expansionsventil 9a, 9b zugeordnet ist. Weiter ist vor den Expansionsventilen eine Weiche 14 vorgesehen, um das gepumpte Medium wahlweise dem einen oder dem anderen Verdampfer 10a bzw. 10b zuzuführen.

Der erste Verdampfer 10a ist thermisch mit dem Bottich 1 gekoppelt, vorzugsweise indem er an einer ersten Seitenwand 15 desselben angeordnet ist. Somit kann mit dem ersten Verdampfer 10a der Bottich 1 und insbesondere die genannte Seitenwand 15 gekühlt werden.

Der zweite Verdampfer 10b ist thermisch mit einem Ablaufbereich 16 des Geräts gekoppelt, wobei der Begriff "Ablaufbereich" einen Bereich kennzeichnet, durch welchen das Wasser vom Bottich 1 nach Gebrauch an die Abflussleitung 6 abgegeben wird. Somit kann mit dem zweiten Verdampfer 10b dem Ablaufbereich 16 und insbesondere dem dort vorhandenen Wasser Wärme entzogen werden.

Konkret besteht der Ablaufbereich 16 in der Ausführung nach Fig. 1 aus einem Ablaufrohr 17, an oder in welchem der rohrförmige zweite Verdampfer 10b entlang geführt ist, wobei das Ablaufrohr 17 und der zweite Verdampfer 10b thermisch miteinander verbunden sind. Um die Interaktionslänge zwischen Verdampfer 10b und Ablaufrohr 17 zu verlängern und die Menge des im Ablaufbereich 16 speicherbaren Wassers auf mindestens etwa die Menge des während einer Prozessphase benötigen Wassers, d.h. mindestens etwa 3 Liter, zu erhöhen, sind Ablaufrohr 17 und der Verdampfer 10b vorzugsweise mäanderförmig oder spiralförmig verlegt. Um den Wärmetransfer zu verbessern, läuft das Wasser im Ablaufrohr 17 vorzugsweise in entgegengesetzter Richtung zum Medium im zweiten Verdampfer 10b.

Das Medium vom ersten Verdampfer 10a und vom zweiten Verdampfer 10b wird in einem Kombinationsventil oder einen zweiten Weiche 18 vor dem Kompressor 7 wieder zusammengeführt .

Die Funktionsweise des Geräts ist wie folgt:
1. Zu Beginn einer Hauptreinigungsphase wird Frischwasser über das Frischwasserventil 3 eingelassen.
2. Gleichzeitig wird die Wärmepumpe gestartet, mit dem Ziel, Wärmeenergie aus dem Wasser im Ablaufbereich 16 dem Bottich 1 zuzuführen. Hierzu wird die Weiche 14 so eingestellt, dass der zweite Verdampfer 10b in Betrieb ist. Die Wärmepumpe wird abgeschaltet, wenn die Temperatur des Wassers im Ablaufbereich eine Schwelle, z.B. 5°C, unterschreitet. Erreicht die Temperatur im Bottich bzw. im Reinigungswasser dabei einen vorgegebenen Wert (je nach Programm z.B. zwischen 40° und 60°C) nicht, so kann zusätzlich elektrisch geheizt werden, entweder gleichzeitig mit oder nach dem Heizen mittels Wärmepumpe.
3. Am Ende der Hauptreinigungsphase wird das Wasser aus dem Bottich in den Ablaufbereich 16 abgelassen. Dort ersetzt es das Wasser, welches durch die Wärmepumpe in Schritt 2 abgekühlt wurde.
4. Über Frischwasserventil 3 wird neues Frischwasser für eine Zwischenspülphase eingelassen.
5. Die Wärmepumpe wird wieder in Gang gesetzt, um die Wärme vom Ablaufbereich 16 in den Bottich 1 zu fördern. Wiederum wird dabei das Wasser im Ablaufbereich 16 höchstens auf die erwähnte Schwelle von z.B. 5°C abgekühlt. Gleichzeitig wird die Zirkulationspumpe, welche Wasser vom Sumpf 2 in die Sprüharme fördert, vorzugsweise mindestens zeitweise mit geringer Leistung betrieben, und zwar derart, dass Wasser ohne Beaufschlagung des Spülguts aus dem unteren Sprüharm fliesst. Somit wird erreicht, dass das Wasser die Wärme vom Kondensator 8 im Boden 12 des Bottichs 1 aufnehmen kann, ohne dass dabei das Spülgut vom kalten Wasser abgekühlt wird. Sobald die Wärme vom Ablaufbereich 16 getauscht ist, wird das Spülgut zwischengespült und sodann die Zwischenspülphase beendet.
6. Das Wasser aus dem Bottich 1 wird wiederum abgepumpt und ersetzt das kalte Wasser im Ablaufbereich 16.
7. Über Frischwasserventil 3 wird neues Frischwasser für eine Glanzspülphase (Klarspülphase) eingelassen.
8. Die Wärmepumpe wird wieder in Gang gesetzt, um die Wärme vom Ablaufbereich 16 in den Bottich 1 zu fördern. Wiederum wird die Zirkulationspumpe, welche Wasser vom Sumpf 2 in die Sprüharme fördert, vorzugsweise mindestens zeitweise mit geringer Leistung betrieben, damit das Wasser zwar umgepumpt wird, ohne aber das Spülgut zu beaufschlagen. Sobald die Wärme vom Ablaufbereich 16 getauscht ist, wird das Spülgut glanzgespült und sodann die Glanzspülphase beendet. Das Glanzpülwasser kann an den Ablaufbereich 16 abgegeben werden.
9. Nun startet die Trockenphase. Die Weiche 14 wird umgeschaltet, so dass nun der erste Verdampfer 10a im Kreislauf liegt, nicht aber der zweite Verdampfer 10b. Die Wärmepumpe wird gestartet. Somit wird der Boden 12 des Bottichs 1 vom Kondensator 8 erwärmt, während die Seitenwand 15 vom Verdampfer 10a abgekühlt wird. Dadurch entsteht ein Konvektionsstrom im Bottich 1, indem Luft über dem Kondensator 8 aufgewärmt wird und aufsteigt. Diese Luft durchströmt das Spülgut und trocknet dieses. Die Luft kommt sodann mit der Seitenwand 15 in Kontakt, wo sie abgekühlt wird, so dass ihr Wasser entzogen wird. Das auskondensierte Wasser läuft der Seitenwand 15 entlang nach unten und gelangt in den Sumpf 2.

Die Konvektion in Schritt 9 kann verstärkt werden, indem, wie gezeigt, der Kondensator 8 nur an einem von der ersten Seitenwand 15 abgewandten Bereich des Bodens 12 angeordnet ist.

Aus dem obigen Prozessablauf ist ersichtlich, dass die Wärmepumpe zwei Zwecken dient. Einerseits wird sie dazu verwendet, Wärme aus dem Ablaufbereich 16 in den Bottich 1 bzw. das dort vorhandene Wasser zu transferieren. Weiter wird sie dazu eingesetzt, der Luft im Bottich 1 während der Trocknung Wasser zu entziehen. Dabei werden die beiden Verdampfer 10a und 10b alternativ eingesetzt. Indem jedem Verdampfer ein eigenes Expansionsventil 9a bzw. 9b zugeordnet ist, können die Expansionsventile den Grössen und gewünschten Betriebstemperaturen der beiden Verdampfer optimal angepasst werden. Zudem kann in diesem Fall die Weiche 14 im Hochdruckbereich angeordnet werden, wo deren Strömungswiderstand eine kleinere Rolle spielt. Es ist allerdings auch denkbar, nur ein gemeinsames Expansionsventil für beide Verdampfer 10a, 10b vorzusehen.

Im obigen Beispiel wird in den Schritten 5 und 8 Wärme aus der jeweilig vorhergehenden Prozessphase in die laufende Prozessphase transferiert. Je nach Zahl der Prozessphasen können auch weitere solche Schritte stattfinden. Dabei wird jeweils am Ende der Prozessphase das abgekühlte Wasser im Ablaufbereich 16 mit gebrauchtem, warmem Wasser ersetzt.

Denkbar ist es auch, in der Trockenphase zumindest zeitweise den zweiten Verdampfer 10b zu betreiben, entweder zusammen (parallel) oder alternierend zum ersten Verdampfer, um so dem Bottich 1 noch weiter Wärme aus dem Ablaufbereich 16 zuzuführen.

Die beiden oben genannten Funktionen der Wärmepumpe (Trocknungsprozess und Wärmetransfer) können auch einzeln eingesetzt werden. So zeigt Fig. 2 eine einfachere Ausführung eines Geschirrspülers, bei welcher lediglich der erste Verdampfer 10a vorhanden ist. Der zweite Verdampfer 10b ist weggelassen, wodurch sich die Konstruktion vereinfacht. In diesem Fall wird die Wärmepumpe lediglich dazu eingesetzt, die Trocknung zu unterstützen.

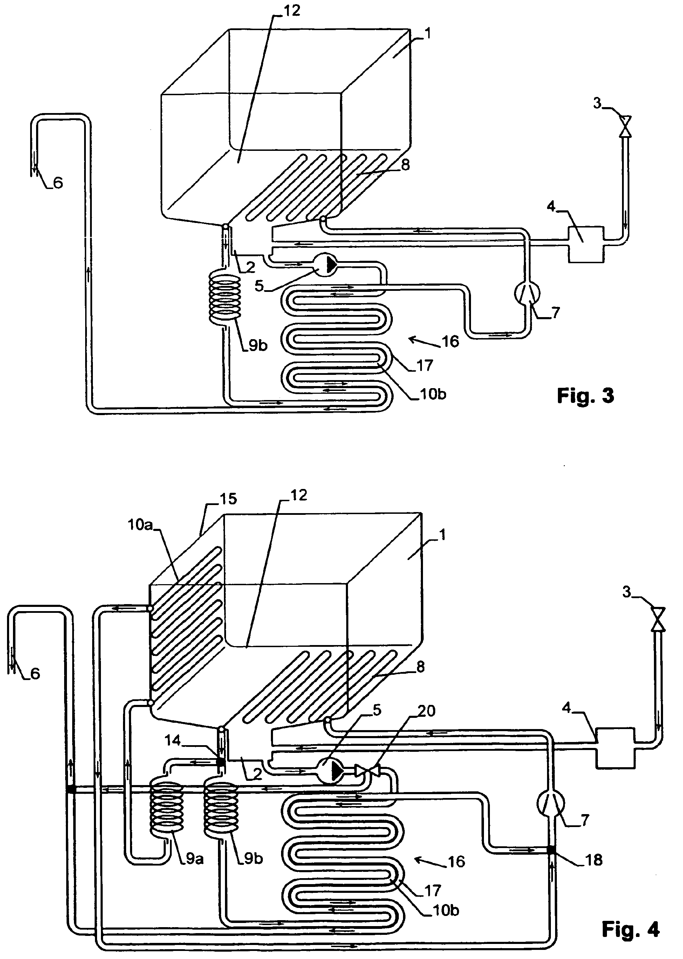

Entsprechend ist in Fig. 3 eine alternative Ausführung dargestellt, bei welcher lediglich der zweite Verdampfer 10b vorhanden und der erste Verdampfer 10a weggelassen ist. Wiederum vereinfacht sich die Konstruktion. In diesem Fall wird die Wärmepumpe dazu eingesetzt, Wärme von einer Prozessphase in eine spätere Prozessphase zu transferieren.

Eine Ausführung gemäss Anspruch ist in Fig. 4 dargestellt. Hier ist ein Überbrückungsventil 20 vorgesehen, mit welchem Wasser vom Bottich 1 wahlweise unter Umgehung des Ablaufbereichs 16 aus dem Gerät an die Abflussleitung 6 abgegeben werden kann. Dadurch wird es möglich, einen Wärmetransfer zwischen zwei Prozessphasen durchzuführen, selbst wenn diese durch eine dritte Prozessphase getrennt sind. Insbesondere benötigt die Zwischenspülphase nicht unbedingt Wärme, so dass mit dem Aufbau gemäss Fig. 4 der oben beschriebene Prozessablauf dahingehend geändert werden kann, dass die Wärmepumpe in der Zwischenspülphase, d.h. in Schritt 5, nicht betrieben wird. Am Schluss der Zwischenspülphase wird das Wasser sodann nicht in den Ablaufbereich 16 abgegeben, sondern unter Umgehung des Ablaufbereichs 16 direkt an die Abflussleitung 6. Somit kann in der darauf folgenden Klarspülphase die Wärme aus dem heissen Wasser der Hauptreinigungsphase in den Bottich gepumpt werden. Dadurch wird ein unnötiger Wärmeverlust vermieden. Ausserdem kann die Zwischenspülphase verkürzt werden, da kein Wärmetransfer erforderlich ist.

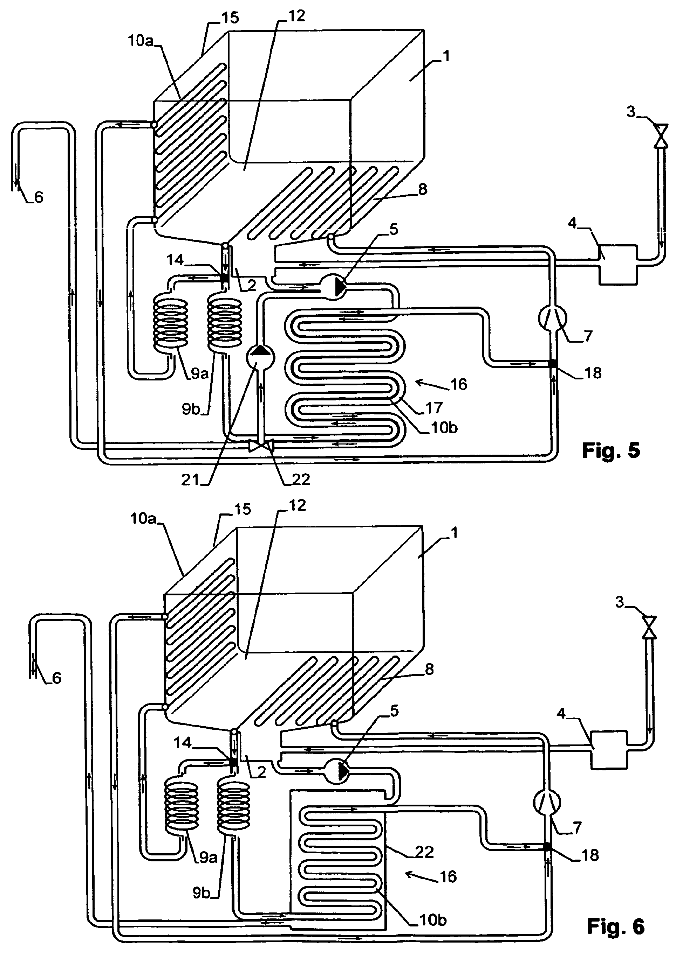

Eine weitere Ausführung des Geschirrspülers ist in Fig. 5 dargestellt. Hier ist eine zusätzliche Zirkulationspumpe 21 sowie ein Umschaltventil 22 am Ende des Ablaufbereichs 16 vorgesehen, so dass das Wasser im Ablaufbereich 16 umgepumpt werden kann. Dadurch kann der Wärmetransfer zwischen dem zweiten Verdampfer 10b und dem Wasser im Ablaufbereich 16 beschleunigt werden.

In der Ausführung nach Fig. 6 wird das Wasser im Ablaufbereich durch einen Tank 22 geführt. Der Tank 22 übernimmt dabei die Speicheraufgabe des Ablaufrohrs 17, zeichnet sich aber durch eine bessere Raumnutzung aus. Allerdings sollte in diesem Fall darauf geachtet werden, dass der Tank 22 so ausgestaltet wird, dass beim Nachfliessen von neuem Abwasser eine möglichst geringe Durchmischung mit dem alten Abwasser stattfindet. Zudem muss der Tank 22 so ausgestaltet werden, dass sich möglichst wenige Verschmutzungen ablagern können. Bei Verwendung eines Ablaufrohrs 17 ist die Gefahr einer Durchmischung sowie einer Verschmutzungsablagerung grundsätzlich geringer.

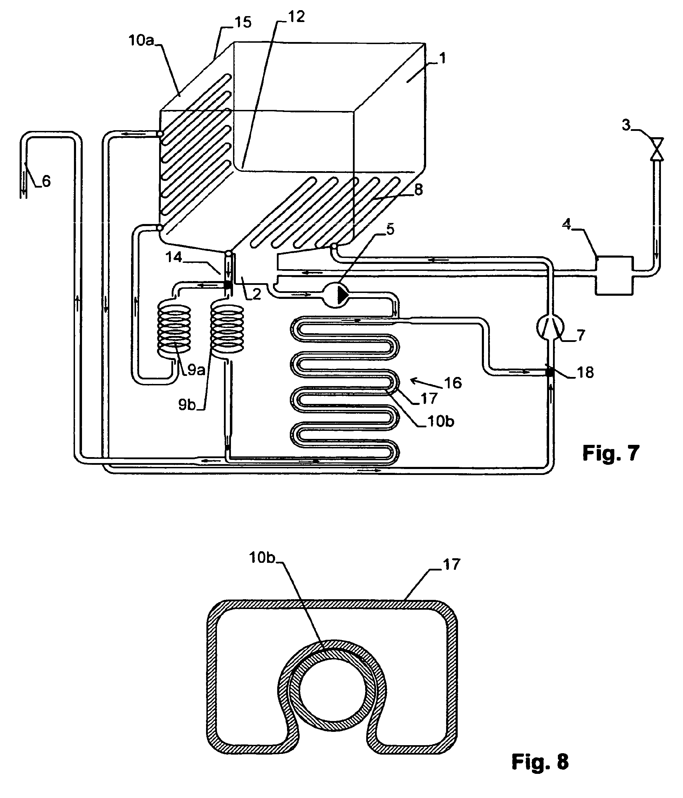

In der Ausführung nach Fig. 7 verlaufen die Leitung des zweiten Verdampfers 10b und das Ablaufrohr 17 nicht nebeneinander, sondern der Verdampfer 10b ist mindestens teilweise vom Ablaufrohr 17 umschlossen.

Eine bevorzugte Konstruktion dieses Wärmetauschers ist in Fig. 8 dargestellt. Wie ersichtlich, ist der Verdampfer 10b in einer längs verlaufenden Ausnehmung des Ablaufrohrs 17 angeordnet. Vorzugsweise ist das Ablaufrohr dabei als Kunststoff-Blasteil ausgestaltet und drückt sich elastisch gegen den Verdampfer 10b.

## Patentansprüche

1. Geschirrspüler mit einem Bottich (1) zur Aufnahme von Spülgut, der eine Wärmepumpe aufweist, wobei die Wärmepumpe mindestens einen Kondensator (8) und mindestens einen Verdampfer (10a, 10b) aufweist, welche derart angeordnet sind, dass dem Prozesswasser oder dem Bottich (1) Wärme entzogen werden kann, wobei der mindestens eine Verdampfer (10a, 10b) thermisch mit einem Ablaufbereich (16) gekoppelt ist, wobei der Geschirrspüler dazu ausgestaltet ist, Wasser vom Bottich (1) nach Gebrauch durch den Ablaufbereich (16) abzugeben, **dadurch gekennzeichnet, dass** der Geschirrspüler weiter ein Überbrückungsventil (20) aufweist, mit welchem Wasser vom Bottich (1) wahlweise unter Umgehung des Ablaufbereichs (16) aus dem Geschirrspüler abgebbar ist.

2. Geschirrspüler nach Anspruch 1, wobei der Kondensator (8) bzw. mindestens einer der Kondensatoren an einer Wand des Bottichs (1) angeordnet ist und insbesondere dieser Wand entlang verläuft
und/oder wobei der Geschirrspüler mehrere Verdampfer aufweist, wobei einer der Verdampfer (10a) an einer Wand des Bottichs (1) angeordnet ist und insbesondere dieser Wand entlang verläuft.

3. Geschirrspüler nach Anspruch 2, wobei der Kondensator (8) am Boden (12) des Bottichs (1) angeordnet ist.

4. Geschirrspüler nach einem der Ansprüche 2 oder 3 wobei mindestens einer der Verdampfer (10a, 10b) an einer ersten Seitenwand (15) des Bottichs (1) angeordnet ist.

5. Geschirrspüler nach den Ansprüchen 3 und 4, wobei der Kondensator (8) an einem von der ersten Seitenwand abgewandten Bereich des Bodens (12) angeordnet ist.

6. Geschirrspüler nach einem der vorangehenden Ansprüche, wobei der Geschirrspüler einen ersten Verdampfer (10a) aufweist, der thermisch mit dem Bottich (1) gekoppelt ist und einen zweiten Verdampfer (10b) aufweist, der thermisch mit dem Ablaufbereich (16) gekoppelt ist.

7. Geschirrspüler nach Anspruch 6, wobei er für die zwei Verdampfer (10a, 10b) zwei separate Expansionsventile (9a, 9b) aufweist,
und insbesondere wobei er vor den Expansionsventilen eine Weiche (14) aufweist, um das gepumpte Medium wahlweise dem ersten und dem zweiten Verdampfer (10a, 10b) zuzuführen.

8. Geschirrspüler nach einem der vorangehenden Ansprüche, wobei der Ablaufbereich (16) ein Ablaufrohr (17) aufweist, an oder in welchem der zweite Verdampfer 10b) entlang geführt ist, und insbesondere wobei das Ablaufrohr (17) und der zweite Verdampfer (10b) mäanderförmig oder spiralförmig verlegt sind.

9. Geschirrspüler nach Anspruch 8, wobei der Verdampfer (10b) mindestens teilweise vom Ablaufrohr (17) umschlossen ist.

10. Geschirrspüler nach einem der vorangehenden Ansprüche mit einer Zirkulationspumpe (21), mit welcher Wasser im Ablaufbereich (16) umpumpbar ist.

11. Geschirrspüler nach einem der Ansprüche 8 bis 10, wobei der zweite Verdampfer (10b) mindestens teilweise vom Ablaufrohr (17) umschlossen ist, und insbesondere wobei das Ablaufrohr (17) als Kunststoff-Blasteil mit einer längs verlaufenden Ausnehmung ausgestaltet und der zweite Verdampfer (10b) in der Ausnehmung angeordnet ist.

12. Verfahren zum Betrieb des Geschirrspülers nach einem der vorangehenden Ansprüche, wobei mit der Wärmepumpe dem Prozesswasser oder dem Bottich (1) Wärme entzogen und/oder zugeführt wird.

13. Verfahren nach Anspruch 12, wobei in einer Trocknungsphase mit der Wärmepumpe einem ersten Wandbereich, insbesondere dem Boden (12), des Bottichs (1) Wärme zugeführt und einem zweiten Wandbereich, insbesondere einer Seitenwand (15), Wärme entzogen wird und so ein Konvektionsstrom im Bottich (1) erzeugt wird.

14. Verfahren nach einem der Ansprüche 12 oder 13, wobei das Geschirr in mindestens einer ersten und einer zweiten Prozessphase gereinigt wird, wobei am Ende der ersten Prozessphase Prozesswasser auf dem Bottich (1) in einen Ablaufbereich geleitet wird und am Anfang der zweiten Prozessphase Frischwasser in den Bottich (1) geführt wird, wobei in der zweiten Prozessphase dem Prozesswasser im Ablaufbereich mit der Wärmepumpe Wärme entzogen und dem Prozesswasser im Bottich (1) zugeführt wird, und insbesondere wobei am Ende der zweiten Prozessphase das Prozesswasser vom Bottich (1) in den Ablaufbereich geführt wird und dort das Prozesswasser aus der ersten Prozessphase ersetzt.

15. Verfahren nach Anspruch 14, wobei in der zweiten Reinigungsphase während dem Zuführen von Wärme mittels der Wärmepumpe zum Bottich (1) Prozesswasser durch einen unteren Sprüharm des Geschirrspülers gefördert wird, ohne dass das Wasser das Spülgut beaufschlägt.

16. Verfahren nach einem der Ansprüche 14 oder 15, wobei die Wärmepumpe während einer Zwischenspülphase nicht betrieben wird und das Wasser am Schluss der Zwischenspülphase unter Umgehung des Ablaufbereichs direkt an eine Abflussleitung (6) abgegeben wird, und wobei in der darauf folgenden Klarspülphase Wärme aus dem Heisswasser der Hauptreinigungsphase in den Bottich gepumpt wird.

## Claims

1. Dishwasher with a vat (1) for receiving items to be washed, having a heat pump, wherein the heat pump has at least a condenser (8) and at least an evaporator (10a, 10b), which are arranged in such a way that heat can be extracted from the process water or the vat (1), wherein the at least one evaporator (10a, 10b) is thermally coupled to a discharge area (16), wherein the dishwasher is adapted to supply water from the vat (1) through the discharge area (16) after use, **characterized in that** the dishwasher has furthermore a bypass valve (20) by means of which water can be transferred from the vat (1), optionally by bypassing the discharge area (16), out of the dishwasher.

2. Dishwasher according to claim 1, wherein the condenser (8) or at least one of the condensers is arranged at a wall of the vat (1) and particularly runs along this wall,
and/or wherein the dishwasher has a plurality of evaporators, wherein one of the evaporators (10a) is arranged at a wall of the vat (1) and particularly runs along this wall.

3. Dishwasher according to claim 2, wherein the condenser (8) is arranged on the bottom (12) of the vat (1).

4. Dishwasher according to one of the claims 2 or 3, wherein at least one of the evaporators (10a, 10b) is arranged at a first side wall (15) of the vat (1).

5. Dishwasher according to the claims 3 and 4, wherein the condenser (8) is arranged in an area of the bottom (12) opposite of the first side wall.

6. Dishwasher according to one of the preceding claims, wherein the dishwasher has a first evaporator (10a) which is thermally coupled to the vat (1) and a second evaporator (10b) which is thermally coupled to the discharge area (16).

7. Dishwasher according to claim 6, wherein it has two separate expansion valves (9a, 9b) for the two evaporators (10a, 10b),
and particularly wherein it has a switch (14) before the expansion valves, in order to supply the pumped medium selectively to the first or the second evaporator (10a, 10b).

8. Dishwasher according to one of the preceding claims, wherein the discharge area (16) has a discharge pipe (17), alongside or inside which the second evaporator (10b) is guided, and particularly wherein the discharge pipe (17) and the second evaporator (10b) are installed in a meander-shaped or helical way.

9. Dishwasher according to claim 8, wherein the second evaporator (10b) is surrounded at least partly by the discharge pipe (17).

10. Dishwasher according to one of the preceding claims, with a circulation pump (21) by means of which water can be circulated in the discharge area (16).

11. Dishwasher according to one of the claims 8 to 10, wherein the second evaporator (10b) is at least partly surrounded by the discharge pipe (17), and particularly wherein the discharge pipe (17) is formed as a blow-moulded plastic part with an elongate recess and the second evaporator (10b) is arranged inside the recess.

12. Method for operating the dishwasher according to one of the preceding claims, wherein heat is extracted from and/or supplied to the process water or the vat (1) by means of the heat pump.

13. Method according to claim 12, wherein in a drying phase heat is supplied to a first wall section, particularly the bottom (12), of the vat (1) by means of the heat pump and heat is extracted from a second wall section, particularly a side wall (15), and by this a convection stream is generated in the vat (1).

14. Method according to one of the claims 12 or 13, wherein the dishes are washed in at least a first and a second process phase, wherein at the end of the first process phase process water is supplied onto the vat (1) in a discharge area and at the beginning of the second phase fresh water is guided into the vat (1), wherein in the second process phase heat is extracted from the process water in the discharge area by means of the heat pump and supplied to the process water in the vat (1), and particularly wherein at the end of the second process phase the process water is guided from the vat (1) into the discharge area and replaces there the process water from the first process phase.

15. Method according to claim 14, wherein, in the second washing phase during the supply of heat to the vat (1) by means of the heat pump, process water is transported through a lower spraying arm of the dishwasher without the water impinging on the items to be washed.

16. Method according to one of the claims 14 or 15, wherein the heat pump is not operated during an intermediary wash phase and the water is discharged directly into a discharge pipe (6) by bypassing the discharge area, and wherein heat from the hot water of the main wash phase is pumped into the vat in the subsequent rinsing phase.

## Revendications

1. Lave-vaisselle avec une cuve (1) pour la réception de vaisselle, ayant une thermopompe, la thermopompe ayant au moins un condenseur (8) et au moins un évaporateur (10a, 10b) qui sont arrangés de sorte que de la chaleur peut être retirée de l'eau de processus ou de la cuve (1), l'au moins un évaporateur (10a, 10b) étant thermiquement couplé avec une zone d'écoulement (16), le lave-vaisselle étant adapté à transmettre de l'eau de la cuve (1) à travers la zone d'écoulement (16) après l'usage, **caractérisé en ce que** le lave-vaisselle a de plus une soupape de dérivation (20) à l'aide de laquelle de l'eau de la cuve (1) peut être transférée de la cuve (1) hors du lave-vaisselle, au choix en contournant la zone d'écoulement (16).

2. Lave-vaisselle selon la revendication 1, le condenseur (8) ou bien au moins un des condenseurs étant arrangé auprès d'une paroi de la cuve (1) et particulièrement s'étendant le long de cette paroi,
et/ou le lave-vaisselle ayant une pluralité d'évaporateurs, l'un des évaporateurs (10a) étant arrangé à une paroi de la cuve (1) et particulièrement s'étendant le long de cette paroi.

3. Lave-vaisselle selon la revendication 2, le condenseur (8) étant arrangé sur le sol (12) de la cuve (1).

4. Lave-vaisselle selon l'une des revendications 2 ou 3, au moins un des évaporateurs (10a, 10b) étant arrangé auprès d'une première paroi latérale (15) de la cuve (1).

5. Lave-vaisselle selon les revendications 3 et 4, le condenseur (8) étant arrangé auprès d'une zone du sol (12) opposée de la première paroi latérale.

6. Lave-vaisselle selon l'une des revendications précédentes, le lave-vaisselle ayant un premier évaporateur (10a) couplé thermiquement à la cuve (1) et un deuxième évaporateur (10b) couplé thermiquement à la zone d'écoulement (16).

7. Lave-vaisselle selon la revendication 6, ayant deux valves d'expansion séparées (9a, 9b) pour les deux évaporateurs (10a, 10b),
et particulièrement ayant un commutateur (14) avant les valves d'expansion, afin d'alimenter au choix le premier et le deuxième évaporateur (10a, 10b).

8. Lave-vaisselle selon l'une des revendications précédentes, la zone d'écoulement (16) ayant un tuyau d'écoulement (17), auprès ou dans lequel le deuxième évaporateur (10b) est guidé, et particulièrement le tuyau d'écoulement (17) et le deuxième évaporateur (10b) étant posés en méandre ou en spirale.

9. Lave-vaisselle selon la revendication 8, le deuxième évaporateur (10b) étant entouré au moins partiellement du tuyau d'écoulement (17).

10. Lave-vaisselle selon l'une des revendications précédentes, avec une pompe de circulation (21) à l'aide de laquelle de l'eau peut être transvasée à la pompe dans la zone d'écoulement (16).

11. Lave-vaisselle selon l'une des revendications 8 à 10, le deuxième évaporateur (10b) étant entouré au moins partiellement du tuyau d'écoulement (17), et particulièrement le tuyau d'écoulement (17) ayant une exclusion oblongue formée d'un composant plastique moulé par soufflage et le deuxième évaporateur (10b) étant arrangé dans l'exclusion.

12. Méthode pour l'opération d'un lave-vaisselle selon l'une des revendications précédentes, de la chaleur étant retirée de et/ou alimentée en l'eau de processus ou la cuve (1) avec la thermopompe.

13. Méthode selon la revendication 12, de la chaleur étant alimentée en une première zone de la paroi, particulièrement le sol (12), de la cuve (1) à l'aide de la thermopompe dans une phase de séchage et de la chaleur étant retirée d'une deuxième zone de la paroi, particulièrement une paroi latérale (15), et cela créant un courant de convection dans la cuve (1).

14. Méthode selon la revendication 12 ou 13, la vaisselle étant nettoyée dans une première et une deuxième phase du processus, de l'eau de processus étant transmise sur la cuve (1) dans une zone d'écoulement à la fin de la première phase du processus et de l'eau fraîche étant versée dans la cuve (1) au début de la deuxième phase du processus, de la chaleur étant retirée de l'eau de processus dans la zone d'écoulement à l'aide de la thermopompe et étant transmise à l'eau de processus dans la cuve (1), et particulièrement à la fin de la deuxième phase de processus l'eau de processus étant transmise de la cuve (1) dans la zone d'écoulement et remplaçant là-bas l'eau de processus de la première phase de processus.

15. Méthode selon la revendication 14, dans la deuxième phase de processus pendant l'alimentation de chaleur à la cuve (1) à l'aide de la thermopompe, de l'eau de processus étant convoyée à travers un bras inférieur d'aspersion du lave-vaisselle sans que l'eau touche la vaisselle.

16. Méthode selon l'une des revendications 14 ou 15, la thermopompe n'étant pas opérée pendant une phase de lavage intermédiaire et l'eau est déchargée directement dans un tuyau d'écoulement (6) en contournant la zone d'écoulement, et de la chaleur de l'eau chaude de la phase de lavage principale étant pompée dans la cuve dans la phase ultérieure de rinçage.
